# EUROPEAN PATENT SPECIFICATION

(11) **EP 4 639 301 B1**
(45) Date of publication and mention of the grant of the patent: **07.10.2026**
(21) Application number: 23836347.7
(22) Date of filing: 14.12.2023
(51) Int. Cl.: G05B 23/02, G06N 3/0442, G06N 3/0455, G06N 3/09

(54) **ENSEMBLE MULTI-DIRECTIONAL ANOMALY AND SCENARIO SHIFT DETECTION FOR FLUID-NETWORKS**
MULTIDIREKTIONALE ENSEMBLE-ANOMALIE- UND SZENARIOVERSCHIEBUNGSDETEKTION FÜR FLUIDNETZWERKE
DÉTECTION D'ANOMALIE MULTIDIRECTIONNELLE D'ENSEMBLE ET DE DÉCALAGE DE SCÉNARIO POUR RÉSEAUX DE FLUIDE

(30) Priority: 21.12.2022 DE 102022134267
(43) Date of publication of application: 29.10.2025
(73) Proprietor: Endress+Hauser Flowtec AG, 4153 Reinach (CH)
(72) Inventor: PAGE, Rebecca, 4054 Basel (CH); WERNLI, Stephan, 4153 Reinach (CH)
(74) Representative: Endress + Hauser Group Services (Deutschland) AG+Co. KG
(86) International application number: PCT/EP2023/085779
(87) International publication number: WO 2024/132832

(56) References cited:
- WO-A1-2021/144619
- US-A- 5 548 528

## Description

The invention relates to a data-driven method for continuously monitoring fluid in a fluid network and triggering an alert in case of unexpected characteristics of the fluid and to a system for carrying out the method.

Leakage in networks with fluids, such as water distribution networks, leads to loss of both resource and energy. Losses of fluid in the form of treated/purified water are therefore losses of revenue to the utilities of the water industry. Losses of other forms of fluids, e.g., wastewater, can also lead to environmental degradation.

Fluid losses can have several causes, e.g., losses due to leaking pipes and other components of the network infrastructure, incorrect or missing measurements, or unexpected and undocumented consumption. Incorrect measurements due to sensor failures mean loss of information, which is accompanied by a loss of control. Unexpected water consumption, for example, can be a drain on networks and their infrastructure, as well as a sign of unauthorized consumption, and thus loss of revenue.

Common methods of detecting unexpected consumption include mass balancing of pipe networks or areas, e.g., District Metered Areas (DMA), monitoring of minimum night flow, simulation of the pipe network using hydraulic models, forecasting using artificial neural networks to predict expected consumption at key points.

These methods often require a detailed knowledge of the individual distribution networks, such as individual meters, timestamps, and locations. Currently available data-driven solutions rely mainly on the application of user-specific thresholds, which must be entered manually.

The international application WO 2021/144619 A1 discloses a system for monitoring and controlling a dynamic physical network, such as an oil, gas, or water pipeline. The system employs multiple sensors associated with different network segments, virtual sensors that accumulate and preprocess time-dependent measurements such as pressure, flow, temperature, or acoustic signals, and a reinforcement-learning-based artificial neural network for nonlinear state estimation and predictive control. It further teaches that the measured values are continuously transmitted to a processing element, where time-series representations and derived analytical features (e.g., frequency, wavelength, autocorrelation, signal modes) are created.

The US patent application US 5 548 528 A discloses validating and substituting faulty sensor signals using a virtual sensor module that estimates missing or unreliable readings based on data from other sensors in the system.

The object of the present invention is to provide a data-driven method for monitoring fluid in a fluid network with a holistic view and detecting of irregularities of the characteristics of the fluid in the fluid network.

The object is achieved by the method specified in independent claim 1 and the system described in claim 11 for carrying out the method.

Method-wise the object is solved with the following steps:
a) Measuring one or more physical quantities at each of three or more measurement units, separately, said physical quantities are relevant to fluid transport, said measurement units are located at three or more different locations in said fluid network, respectively, each of the measurement units comprising one or more sensors for determining one or more measured values of the physical quantities, wherein the physical quantities are time dependent and each of said measured values is determined continuously in a predefined measurement time interval,
b) transmitting said measured values to a data processing unit,
c) using said data processing unit to determine, for each measurement unit, an observed time series of measured values of each physical quantity,
d) and using the data processing unit to process:
   one or more description steps, comprising:
      - decomposing each observed time series,
      - fitting each observed time series with a time series model,
      - performing one or more statistical hypothesis tests for said time series model,
      - and measuring one or more statistical distances between every two different observed time series,
   one or more estimation steps, comprising:
      - determining a time-sensitive neural network that is trained based on historical observed time series of the one or more physical quantities from all measurement units,
      - and using said time-sensitive neural network to process an estimation: estimating, for each measurement unit, an estimated time series of each physical quantity, and using said time-sensitive neural network to process an estimation: estimating, for each measurement unit (MU), an estimated time series of each physical quantity, wherein for each estimation, all measurement units (MUs) are divided into the measurement unit (MU) being estimated and the remaining measurement units (MUs), wherein the observed time series of each physical quantity from the remaining measurement units (MUs) are used to estimate the estimated time series of each corresponding physical quantity from the measurement unit (MU) being estimated, the estimated time series comprising estimates for all measured values of each corresponding physical quantity,
   and one or more evaluation steps, comprising:
      - determining, for each measurement unit, a deviation between each measured value of each physical quantity and each of said estimates,
      - gathering said statistical distances determined from said one or more description steps, if one or more predetermined limit values of said deviation are exceeded,
      - quantifying effect of disturbance causing deviation in affected measurement units and rating proximity of measurements units to disturbance source,
      - retraining the time-sensitive neural network, if more than one predetermined limit values of said statistical distances are exceeded,
      - and outputting an alert, if at least one but not all predetermined limit values of the statistical distances are exceeded.

Advantageously, the one or more physical quantities comprise at least one of: flow, temperature, level, and pressure. The one or more physical quantities are indicative of the characteristics of the fluid.

In one embodiment, the data processing unit is in a control center at a distance.

In one embodiment, the time series model comprises at least one of: an autoregressive (AR) model, an autoregressive moving average (ARMA) model, an autoregressive integrated moving average (ARIMA) model, and an autoregressive fractionally integrated moving average (ARFIMA) model.

In one embodiment, the one or more statistical hypothesis tests comprise a Dickey-Fuller test.

In one embodiment, the one or more statistical distances comprise a Kullback-Leibler divergence.

In one embodiment, the time-sensitive neural network comprises at least one of: a recurrent neural network (RNN), a Long short-term memory (LSTM), and a transformer.

In one embodiment, the estimation comprises at least one of: a sequence approach and a sequence-to-sequence approach.

In one embodiment, the evaluation step comprises a cluster analysis of the measured values of the observed time series and/or the phase shifts of the observed time series if one or more predetermined limit values of the deviation are exceeded.

In one embodiment, the alert relates to at least one of: an abnormal characteristic of the fluid in certain measurement time ranges, an abnormal characteristic of the fluid located between at least two measurement units, and a failure of sensor.

The object is further attained by a system for carrying out the method described above, comprising:
a) a fluid network,
b) three or more measurement units located at three or more different locations in said fluid network, respectively, each of the measurement units comprising one or more sensors for determining one or more measured values of one or more physical quantities, said physical quantities are relevant to fluid transport, and the physical quantities are time dependent and each of said measured values is determined continuously in a predefined measurement time interval,
c) and a data processing unit used for receiving said measured values, wherein said data processing unit is configured to determine, for each measurement unit, an observed time series of measured values of each physical quantity, and the data processing unit is configured to process:
   one or more description steps, comprising:
      - decomposing each observed time series,
      - fitting each observed time series with a time series model,
      - performing one or more statistical hypothesis tests for said time series model,
      - and measuring one or more statistical distances between every two different observed time series,
   one or more estimation steps, comprising:
      - determining a time-sensitive neural network that is trained based on historical observed time series of the one or more physical quantities from all measurement units,
      - and using said time-sensitive neural network to process an estimation: estimating, for each measurement unit, an estimated time series of each physical quantity, and using said time-sensitive neural network to process an estimation: estimating, for each measurement unit (MU), an estimated time series of each physical quantity, wherein for each estimation, all measurement units (MUs) are divided into the measurement unit (MU) being estimated and the remaining measurement units (MUs), wherein the observed time series of each physical quantity from the remaining measurement units (MUs) are used to estimate the estimated time series of each corresponding physical quantity from the measurement unit (MU) being estimated, the estimated time series comprising estimates for all measured values of each corresponding physical quantity,
   and one or more evaluation steps, comprising:
      - determining, for each measurement unit, a deviation between each measured value of each physical quantity and each of said estimates,
      - gathering said statistical distances determined from said one or more description steps, if one or more predetermined limit values of said deviation are exceeded,
      - quantifying effect of disturbance causing deviation in affected measurement units and rating proximity of measurements units to disturbance source,
      - retraining the time-sensitive neural network, if more than one predetermined limit values of said statistical distances are exceeded,
      - and outputting an alert, if at least one but not all predetermined limit values of the statistical distances are exceeded.

This is explained in more detail with reference to the following figures.
- Fig. 1: shows an embodiment of the fluid network and the data processing unit.
- Fig. 2: shows the components of the fluid network.
- Fig. 3: shows an embodiment of the time-sensitive neural network.

In the figures, the same features are marked with the same reference signs.

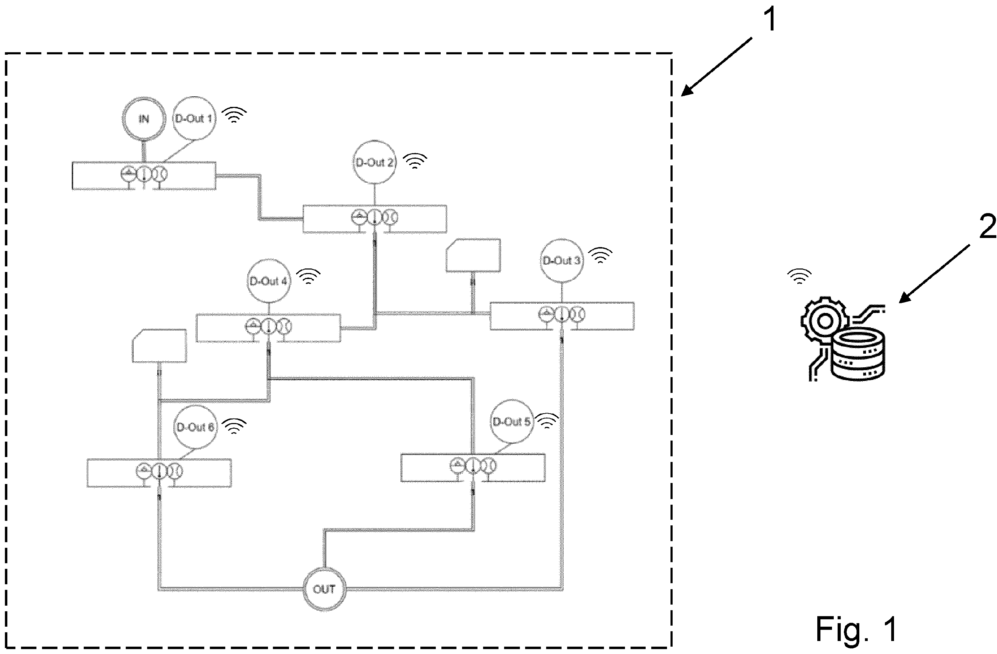

Referring to Fig. 1, a fluid network 1 communicates with a data processing unit 2. The communication between the fluid network 1 and the data processing unit 2 could using wire or wirelessly. The fluid network 1 could be a water distribution network or an oil and gas transportation network. The data processing unit 2 could be an edge computer or a cloud data service.

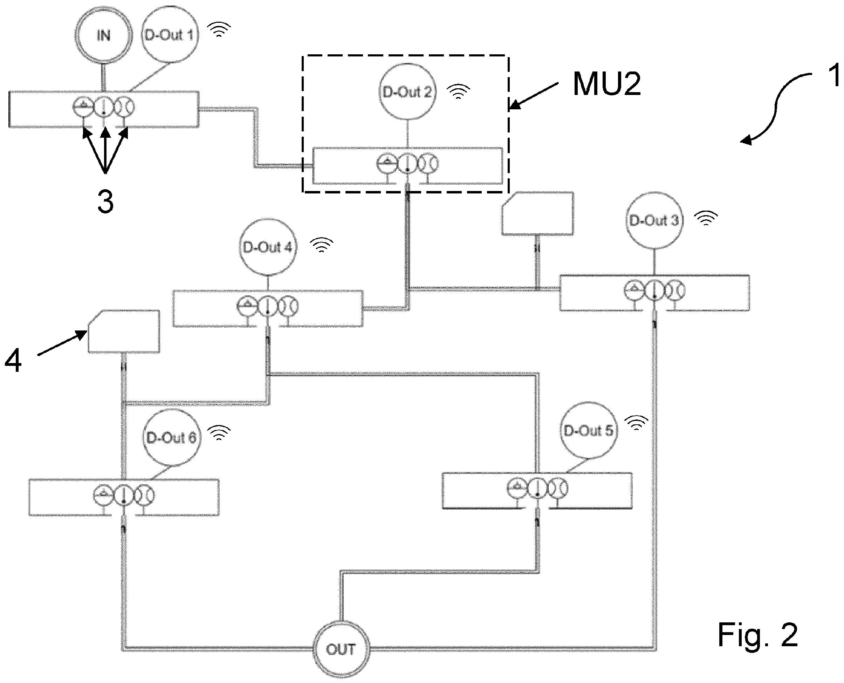

In Fig. 2, the fluid network 1 comprises an entry-described as IN-of a fluid into the network, and an exit-described as OUT-of the fluid from the network. The fluid network 1 comprises six measurement units (MU1, MU2, MU3, MU4, MU5, MU6) and two consumers 4, all located in different locations.

Each measurement unit (MU) comprises three sensors 3, e.g., a flow meter, a pressure sensor, and a temperature sensor. The three sensors 3 measure three physical quantities, e.g., flow, pressure, and temperature, respectively, continuously in a predefined measurement time interval. Flow, pressure, and temperature are indicative of a leakage of water in a water network.

Each MU communicates with the data processing unit 2 (see Fig. 1), transferring the measured values of the flow, pressure, and temperature from each MU to the data processing unit 2. D-Out describes a data interface to the logic module of the invention, e.g., the data processing unit 2. So, the measured values are transmitted through the data interface-D-Out-to the data processing unit 2.

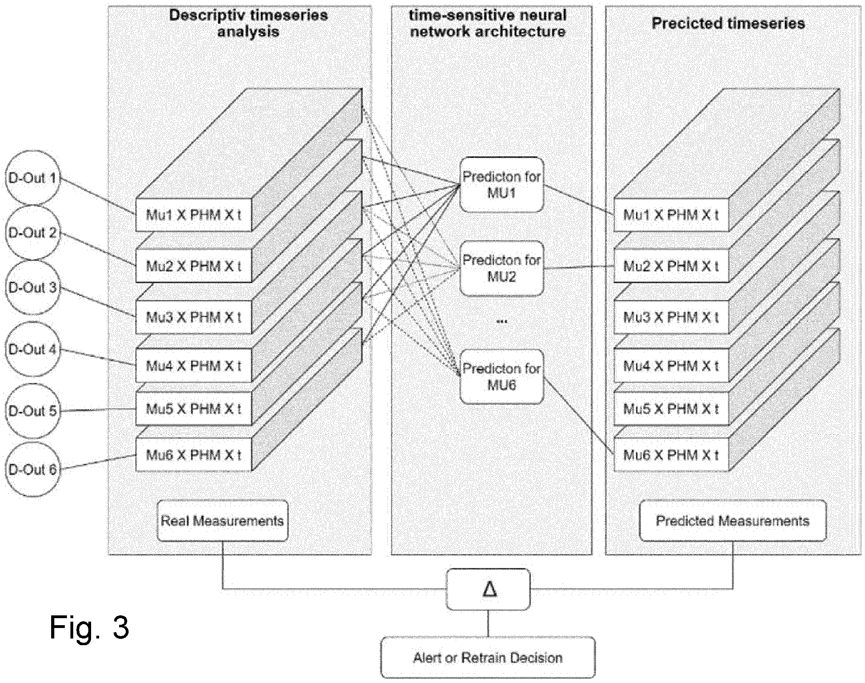

Referring to Fig. 3, the data processing unit 2 receives measured values from each MU. The data processing unit 2 is configured to determine, for each measurement unit 3, three observed time series of measured values (Real Measurements in Fig. 3) of the flow, pressure, and temperature, respectively. In the data processing unit 2, PHM represents Parameter Health Monitoring, which includes all measured values that can be provided by a MU. On the left (Real Measurements) of Fig. 3, the box named "Mu1 X PHM X t" means all measured values and their measurement times that can be provided by the measurement unit 1 (MU1).

The data processing unit 2 is configured to process a descriptive timeseries analysis comprising, e.g., four descriptive steps.

The four descriptive steps comprising a decomposition of each observed time series into several component series, for example, a trend component, a seasonal component, and a noise component. The data processing unit 2 fits each observed time series with a time series model, for example, an autoregressive integrated moving average (ARIMA) model. A statistical hypothesis test, e.g., a Dickey-Fuller test, is then performed for each time series model. And a statistical distance is measured between every two different observed time series. The statistical distance could be a Kullback-Leibler divergence.

In the estimation steps, the data processing unit 2 first determines a time-sensitive neural network that is trained based on historical observed time series of the flow, pressure, and temperature from all measurement units (MUs). The data processing unit 2 then uses the time-sensitive neural network to process a prediction/estimation: estimating, for each MU, three predicted/estimated time series, one for flow, one for pressure, and one for temperature. When estimating the estimated time series, the estimated time series of the physical quantity is estimated only by the observed time series of the corresponding physical quantity, so there is no case of estimating the third physical quantity by the first and second physical quantities. In addition, the data processing unit 2 further divides all MUs into the MU being estimated and the remaining MUs, wherein the observed time series of the physical quantities from the remaining MUs are used to estimate the estimated time series of the corresponding physical quantity from the MU being estimated (Predicted Measurements in Fig. 3). For example, the estimated time series of flow at the MU1 is estimated based on all observed time series of flow that are recorded by MU2, MU3, MU4, MU5, and MU6 rather than MU1.

The time-sensitive neural network is not used to estimate a new physical quantity, but one that is already available in other and the same measurement unit (MU), so that it is able to provide proxy information for faulty measurements of individual sensors in the network.

An evaluation (Δ) comprising one or more evaluation steps are followed the estimation steps. It determines, for each MU, a deviation between each measured value of each physical quantity and each of the estimates. In the evaluation, if one or more predetermined limit values of the deviation are exceeded, the data processing unit 2 then gathers the statistical distances determined from the description steps. The data processing unit 2 quantifies the effect of a disturbance causing deviation in affected MUs and rating proximity of MUs to the disturbance source. If more than one predetermined limit values of said statistical distances are exceeded, the data processing unit 2 retrains the time-sensitive neural network. An expert (e.g., a user or operator of a facility) can stop the retraining, if the estimation results are considered sufficiently accurate. And the data processing unit 2 outputs an alert, if at least one but not all predetermined limit values of the statistical distances are exceeded.

### List of reference signs

- 1: Fluid network
- 2: Data processing unit
- 3: Sensor
- 4: Consumer
- MU2: Measurement unit 2

## Claims

1. A data-driven method for continuously monitoring fluid in a fluid network (1) and triggering an alert in case of unexpected characteristics of the fluid, comprising:
a) Measuring one or more physical quantities at each of three or more measurement units (MUs), separately, said physical quantities are relevant to fluid transport, said measurement units (MUs) are located at three or more different locations in said fluid network, respectively, each of the measurement units (MUs) comprising one or more sensors (3) for determining one or more measured values of the physical quantities, wherein the physical quantities are time dependent and each of said measured values is determined continuously in a predefined measurement time interval,
b) transmitting said measured values to a data processing unit (2),
c) using said data processing unit (2) to determine, for each measurement unit (MU), an observed time series of measured values of each physical quantity,
d) and using the data processing unit (2) to process:
i) one or more description steps, comprising:
- decomposing each observed time series,
- fitting each observed time series with a time series model,
- performing one or more statistical hypothesis tests for said time series model,
- and measuring one or more statistical distances between every two different observed time series,
ii) one or more estimation steps, comprising:
- determining a time-sensitive neural network that is trained based on historical observed time series of the one or more physical quantities from all measurement units (MUs),
- and using said time-sensitive neural network to process an estimation: estimating, for each measurement unit (MU), an estimated time series of each physical quantity, wherein for each estimation, all measurement units (MUs) are divided into the measurement unit (MU) being estimated and the remaining measurement units (MUs), wherein the observed time series of each physical quantity from the remaining measurement units (MUs) are used to estimate the estimated time series of each corresponding physical quantity from the measurement unit (MU) being estimated, the estimated time series comprising estimates for all measured values of each corresponding physical quantity,
iii) and one or more evaluation steps, comprising:
- determining, for each measurement unit (MU), a deviation between each measured value of each physical quantity and each of said estimates,
- gathering said statistical distances determined from said one or more description steps, if one or more predetermined limit values of said deviation are exceeded,
- quantifying effect of disturbance causing deviation in affected measurement units (MUs) and rating proximity of measurements units to disturbance source,
- retraining the time-sensitive neural network, if more than one predetermined limit values of said statistical distances are exceeded,
- and outputting an alert, if at least one but not all predetermined limit values of the statistical distances are exceeded.

2. The method according to claim 1, **characterized in that**,
the one or more physical quantities comprise at least one of: flow, temperature, level, and pressure.

3. The method according to at least one of claims 1 to 2, **characterized in that** the data processing unit (2) is in a control center at a distance.

4. The method according to at least one of claims 1 to 3, **characterized in that** the time series model comprises at least one of: an autoregressive (AR) model, an autoregressive moving average (ARMA) model, an autoregressive integrated moving average (ARIMA) model, and an autoregressive fractionally integrated moving average (ARFIMA) model.

5. The method according to at least one of claims 1 to 4, **characterized in that** the one or more statistical hypothesis tests comprise a Dickey-Fuller test.

6. The method according to at least one of claims 1 to 5, **characterized in that** the one or more statistical distances comprise a Kullback-Leibler divergence.

7. The method according to at least one of claims 1 to 6, **characterized in that** the time-sensitive neural network comprises at least one of: a recurrent neural network (RNN), a Long short-term memory (LSTM), and a transformer.

8. The method according to at least one of claims 1 to 7, **characterized in that** the estimation comprises at least one of: a sequence approach and a sequence-to-sequence approach.

9. The method according to at least one of claims 1 to 8, **characterized in that**, the evaluation step comprises a cluster analysis of the measured values of the observed time series and/or the phase shifts of the observed time series if one or more predetermined limit values of the deviation are exceeded.

10. The method according to at least one of claims 1 to 9, **characterized in that**, the alert relates to at least one of: an abnormal characteristic of the fluid in certain measurement time ranges, an abnormal characteristic of the fluid located between at least two measurement units (MUs), and a failure of sensor.

11. A system for implementing the method according to at least one of claims 1 to 10, comprising:
a) a fluid network (1),
b) three or more measurement units (MUs) located at three or more different locations in said fluid network (1), respectively, each of the measurement units (MUs) comprising one or more sensors (3) for determining one or more measured values of one or more physical quantities, said physical quantities are relevant to fluid transport, and the physical quantities are time dependent and each of said measured values is determined continuously in a predefined measurement time interval,
c) and a data processing unit (2) used for receiving said measured values, wherein said data processing unit (2) is configured to determine, for each measurement unit (MU), an observed time series of measured values of each physical quantity, and the data processing unit (2) is configured to process:
i) one or more description steps, comprising:
- decomposing each observed time series,
- fitting each observed time series with a time series model,
- performing one or more statistical hypothesis tests for said time series model,
- and measuring one or more statistical distances between every two different observed time series,
ii) one or more estimation steps, comprising:
- determining a time-sensitive neural network that is trained based on historical observed time series of the one or more physical quantities from all measurement units (MUs),
- and using said time-sensitive neural network to process an estimation: estimating, for each measurement unit (MU), an estimated time series of each physical quantity, and using said time-sensitive neural network to process an estimation: estimating, for each measurement unit (MU), an estimated time series of each physical quantity, wherein for each estimation, all measurement units (MUs) are divided into the measurement unit (MU) being estimated and the remaining measurement units (MUs), wherein the observed time series of each physical quantity from the remaining measurement units (MUs) are used to estimate the estimated time series of each corresponding physical quantity from the measurement unit (MU) being estimated, the estimated time series comprising estimates for all measured values of each corresponding physical quantity,
iii) and one or more evaluation steps, comprising:
- determining, for each measurement unit (MU), a deviation between each measured value of each physical quantity and each of said estimates,
- gathering said statistical distances determined from said one or more description steps, if one or more predetermined limit values of said deviation are exceeded,
- quantifying effect of disturbance causing deviation in affected measurement units (MUs) and rating proximity of measurements units to disturbance source,
- retraining the time-sensitive neural network, if more than one predetermined limit values of said statistical distances are exceeded,
- and outputting an alert, if at least one but not all predetermined limit values of the statistical distances are exceeded.

## Patentansprüche

1. Datengetriebenes Verfahren zum kontinuierlichen Überwachen eines Fluids in einem Fluidnetzwerk (1) und zum Auslösen eines Alarms im Falle unerwarteter Eigenschaften des Fluids, umfassend:
a) Messen einer oder mehrerer physikalischer Größen separat an jeder von drei oder mehr Messeinheiten (MUs), wobei die physikalischen Größen für einen Fluidtransport relevant sind, wobei die Messeinheiten (MUs) jeweils an drei oder mehr unterschiedlichen Stellen in dem Fluidnetzwerk angeordnet sind, wobei jede der Messeinheiten (MUs) einen oder mehrere Sensoren (3) zum Bestimmen eines oder mehrerer Messwerte der physikalischen Größen umfasst, wobei die physikalischen Größen zeitabhängig sind und jeder der Messwerte kontinuierlich in einem vordefinierten Messzeitintervall bestimmt wird,
b) Übertragen der Messwerte an eine Datenverarbeitungseinheit (2),
c) Verwenden der Datenverarbeitungseinheit (2), um für jede Messeinheit (MU) eine beobachtete Zeitreihe von Messwerten jeder physikalischen Größe zu bestimmen,
d) und Verwenden der Datenverarbeitungseinheit (2) zum Verarbeiten von:
i) einem oder mehreren Beschreibungsschritten, umfassend:
• Zerlegen jeder beobachteten Zeitreihe,
• Anpassen jeder beobachteten Zeitreihe mittels eines Zeitreihenmodells,
• Durchführen eines oder mehrerer statistischer Hypothesentests für das Zeitreihenmodell,
• und Messen eines oder mehrerer statistischer Abstände zwischen jeweils zwei unterschiedlichen beobachteten Zeitreihen,
ii) einem oder mehreren Schätzschritten, umfassend:
• Bestimmen eines zeitsensitiven neuronalen Netzes, das auf Grundlage historischer beobachteter Zeitreihen der einen oder mehreren physikalischen Größen von allen Messeinheiten (MUs) trainiert wird,
• und Verwenden des zeitsensitiven neuronalen Netzes zum Durchführen einer Schätzung: Schätzen, für jede Messeinheit (MU), einer geschätzten Zeitreihe jeder physikalischen Größe,
wobei bei jeder Schätzung alle Messeinheiten (MUs) in die zu schätzende Messeinheit (MU) und die verbleibenden Messeinheiten (MUs) aufgeteilt werden, wobei die beobachteten Zeitreihen jeder physikalischen Größe von den verbleibenden Messeinheiten (MUs) verwendet werden, um die geschätzte Zeitreihe jeder entsprechenden physikalischen Größe von der zu schätzenden Messeinheit (MU) zu schätzen, wobei die geschätzte Zeitreihe Schätzwerte für alle Messwerte jeder entsprechenden physikalischen Größe umfasst,
iii) und einem oder mehreren Auswertungsschritten, umfassend:
• Bestimmen, für jede Messeinheit (MU), einer Abweichung zwischen jedem Messwert jeder physikalischen Größe und jedem der Schätzwerte,
• Sammeln der aus dem einen oder den mehreren Beschreibungsschritten bestimmten statistischen Abstände, wenn ein oder mehrere vorbestimmte Grenzwerte der Abweichung überschritten werden,
• Quantifizieren einer Auswirkung einer die Abweichung verursachenden Störung in betroffenen Messeinheiten (MUs) und Bewerten einer Nähe der Messeinheiten zu einer Störquelle,
• erneutes Trainieren des zeitsensitiven neuronalen Netzes, wenn mehr als ein vorbestimmter Grenzwert der statistischen Abstände überschritten wird,
• und Ausgeben eines Alarms, wenn mindestens einer, jedoch nicht alle vorbestimmten Grenzwerte der statistischen Abstände überschritten werden.

2. Verfahren nach Anspruch 1, **dadurch gekennzeichnet, dass**
die eine oder mehreren physikalischen Größen mindestens eine der folgenden Größen umfassen: Durchfluss, Temperatur, Füllstand und Druck.

3. Verfahren nach mindestens einem der Ansprüche 1 bis 2, **dadurch gekennzeichnet, dass** sich die Datenverarbeitungseinheit (2) in einer entfernten Leitstelle befindet.

4. Verfahren nach mindestens einem der Ansprüche 1 bis 3, **dadurch gekennzeichnet, dass** das Zeitreihenmodell mindestens eines der folgenden Modelle umfasst: ein autoregressives Modell (AR-Modell), ein autoregressives Modell mit gleitendem Mittelwert (ARMA-Modell), ein autoregressives integriertes Modell mit gleitendem Mittelwert (ARIMA-Modell) und ein autoregressives fraktional integriertes Modell mit gleitendem Mittelwert (ARFIMA-Modell).

5. Verfahren nach mindestens einem der Ansprüche 1 bis 4, **dadurch gekennzeichnet, dass** der eine oder die mehreren statistischen Hypothesentests einen Dickey-Fuller-Test umfassen.

6. Verfahren nach mindestens einem der Ansprüche 1 bis 5, **dadurch gekennzeichnet, dass** der eine oder die mehreren statistischen Abstände eine Kullback-Leibler-Divergenz umfassen.

7. Verfahren nach mindestens einem der Ansprüche 1 bis 6, **dadurch gekennzeichnet, dass** das zeitsensitive neuronale Netz mindestens eines der folgenden umfasst: ein rekurrentes neuronales Netz (RNN), ein Long-Short-Term-Memory-Netz (LSTM) und einen Transformer.

8. Verfahren nach mindestens einem der Ansprüche 1 bis 7, **dadurch gekennzeichnet, dass** die Schätzung mindestens einen der folgenden Ansätze umfasst: einen Sequenzansatz und einen Sequenz-zu-Sequenz-Ansatz.

9. Verfahren nach mindestens einem der Ansprüche 1 bis 8, **dadurch gekennzeichnet, dass** der Auswertungsschritt eine Clusteranalyse der Messwerte der beobachteten Zeitreihen und/oder der Phasenverschiebungen der beobachteten Zeitreihen umfasst, wenn ein oder mehrere vorbestimmte Grenzwerte der Abweichung überschritten werden.

10. Verfahren nach mindestens einem der Ansprüche 1 bis 9, **dadurch gekennzeichnet, dass** sich der Alarm auf mindestens eines der folgenden bezieht: eine anormale Eigenschaft des Fluids in bestimmten Messzeitbereichen, eine anormale Eigenschaft des Fluids, die zwischen mindestens zwei Messeinheiten (MUs) angeordnet ist, und einen Ausfall eines Sensors.

11. System zum Implementieren des Verfahrens nach mindestens einem der Ansprüche 1 bis 10, umfassend:
a) ein Fluidnetzwerk (1),
b) drei oder mehr Messeinheiten (MUs), die jeweils an drei oder mehr unterschiedlichen Stellen in dem Fluidnetzwerk (1) angeordnet sind, wobei jede der Messeinheiten (MUs) einen oder mehrere Sensoren (3) zum Bestimmen eines oder mehrerer Messwerte einer oder mehrerer physikalischer Größen umfasst, wobei die physikalischen Größen für einen Fluidtransport relevant sind und wobei die physikalischen Größen zeitabhängig sind und jeder der Messwerte kontinuierlich in einem vordefinierten Messzeitintervall bestimmt wird,
c) und eine Datenverarbeitungseinheit (2), die zum Empfangen der Messwerte verwendet wird,
wobei die Datenverarbeitungseinheit (2) dazu ausgestaltet ist, für jede Messeinheit (MU) eine beobachtete Zeitreihe von Messwerten jeder physikalischen Größe zu bestimmen, und wobei die Datenverarbeitungseinheit (2) dazu ausgestaltet ist, Folgendes zu verarbeiten:
i) einen oder mehrere Beschreibungsschritte, umfassend:
• Zerlegen jeder beobachteten Zeitreihe,
• Anpassen jeder beobachteten Zeitreihe mittels eines Zeitreihenmodells,
• Durchführen eines oder mehrerer statistischer Hypothesentests für das Zeitreihenmodell,
• und Messen eines oder mehrerer statistischer Abstände zwischen jeweils zwei unterschiedlichen beobachteten Zeitreihen,
ii) einen oder mehrere Schätzschritte, umfassend:
• Bestimmen eines zeitsensitiven neuronalen Netzes, das auf Grundlage historischer beobachteter Zeitreihen der einen oder mehreren physikalischen Größen von allen Messeinheiten (MUs) trainiert wird,
• und Verwenden des zeitsensitiven neuronalen Netzes zum Durchführen einer Schätzung: Schätzen, für jede Messeinheit (MU), einer geschätzten Zeitreihe jeder physikalischen Größe,
wobei bei jeder Schätzung alle Messeinheiten (MUs) in die zu schätzende Messeinheit (MU) und die verbleibenden Messeinheiten (MUs) aufgeteilt werden, wobei die beobachteten Zeitreihen jeder physikalischen Größe von den verbleibenden Messeinheiten (MUs) verwendet werden, um die geschätzte Zeitreihe jeder entsprechenden physikalischen Größe von der zu schätzenden Messeinheit (MU) zu schätzen, wobei die geschätzte Zeitreihe Schätzwerte für alle Messwerte jeder entsprechenden physikalischen Größe umfasst,
iii) und einen oder mehrere Auswertungsschritte, umfassend:
• Bestimmen, für jede Messeinheit (MU), einer Abweichung zwischen jedem Messwert jeder physikalischen Größe und jedem der Schätzwerte,
• Sammeln der aus dem einen oder den mehreren Beschreibungsschritten bestimmten statistischen Abstände, wenn ein oder mehrere vorbestimmte Grenzwerte der Abweichung überschritten werden,
• Quantifizieren einer Auswirkung einer die Abweichung verursachenden Störung in betroffenen Messeinheiten (MUs) und Bewerten einer Nähe der Messeinheiten zu einer Störquelle,
• erneutes Trainieren des zeitsensitiven neuronalen Netzes, wenn mehr als ein vorbestimmter Grenzwert der statistischen Abstände überschritten wird,
• und Ausgeben eines Alarms, wenn mindestens einer, jedoch nicht alle vorbestimmten Grenzwerte der statistischen Abstände überschritten werden.

## Revendications

1. Procédé basé sur les données pour surveiller en continu un fluide dans un réseau de fluides (1) et pour déclencher une alerte en cas de caractéristiques inattendues du fluide, comprenant :
a) mesurer une ou plusieurs grandeurs physiques séparément au niveau de chacune de trois unités de mesure (MU) ou plus, les grandeurs physiques étant pertinentes pour le transport du fluide, les unités de mesure (MU) étant disposées respectivement à trois emplacements différents ou plus dans le réseau de fluides, chacune des unités de mesure (MU) comprenant un ou plusieurs capteurs (3) destinés à déterminer une ou plusieurs valeurs mesurées des grandeurs physiques, les grandeurs physiques étant dépendantes du temps et chacune des valeurs mesurées étant déterminée en continu dans un intervalle de mesure prédéfini,
b) transmettre les valeurs mesurées à une unité de traitement de données (2),
c) utiliser l'unité de traitement de données (2) afin de déterminer, pour chaque unité de mesure (MU), une série temporelle observée de valeurs mesurées de chaque grandeur physique,
d) et utiliser l'unité de traitement de données (2) pour exécuter :
i) une ou plusieurs étapes de description, comprenant :
• décomposer chaque série temporelle observée,
• ajuster chaque série temporelle observée au moyen d'un modèle de série temporelle,
• réaliser un ou plusieurs tests statistiques d'hypothèse pour le modèle de série temporelle,
• et mesurer une ou plusieurs distances statistiques entre deux séries temporelles observées différentes quelconques,
ii) une ou plusieurs étapes d'estimation, comprenant :
• déterminer un réseau neuronal sensible au temps qui est entraîné sur la base de séries temporelles observées historiques de la ou des grandeurs physiques provenant de toutes les unités de mesure (MU),
• et utiliser le réseau neuronal sensible au temps pour réaliser une estimation consistant à estimer, pour chaque unité de mesure (MU), une série temporelle estimée de chaque grandeur physique,
dans laquelle, pour chaque estimation, toutes les unités de mesure (MU) sont réparties entre l'unité de mesure (MU) à estimer et les unités de mesure (MU) restantes,
dans laquelle les séries temporelles observées de chaque grandeur physique provenant des unités de mesure (MU) restantes sont utilisées pour estimer la série temporelle estimée de chaque grandeur physique correspondante de l'unité de mesure (MU) à estimer,
la série temporelle estimée comprenant des valeurs estimées pour toutes les valeurs mesurées de chaque grandeur physique correspondante,
iii) et une ou plusieurs étapes d'évaluation, comprenant :
• déterminer, pour chaque unité de mesure (MU), un écart entre chaque valeur mesurée de chaque grandeur physique et chacune des valeurs estimées,
• recueillir les distances statistiques déterminées lors de la ou des étapes de description lorsqu'une ou plusieurs valeurs seuils prédéterminées de l'écart sont dépassées,
• quantifier l'effet d'une perturbation provoquant l'écart dans les unités de mesure (MU) affectées et évaluer la proximité des unités de mesure par rapport à une source de perturbation,
• réentraîner le réseau neuronal sensible au temps lorsque plus d'une valeur seuil prédéterminée des distances statistiques est dépassée,
• et émettre une alerte lorsqu'au moins une, mais pas toutes, des valeurs seuils prédéterminées des distances statistiques sont dépassées.

2. Procédé selon la revendication 1, **caractérisé en ce que**
la ou les grandeurs physiques comprennent au moins l'une des grandeurs suivantes : débit, température, niveau et pression.

3. Procédé selon l'une quelconque des revendications 1 à 2, **caractérisé en ce que**
l'unité de traitement de données (2) est située dans un poste de contrôle distant.

4. Procédé selon l'une quelconque des revendications 1 à 3, **caractérisé en ce que**
le modèle de série temporelle comprend au moins l'un des modèles suivants : un modèle autorégressif (AR), un modèle autorégressif à moyenne mobile (ARMA), un modèle autorégressif intégré à moyenne mobile (ARIMA) et un modèle autorégressif fractionnairement intégré à moyenne mobile (ARFIMA).

5. Procédé selon l'une quelconque des revendications 1 à 4, **caractérisé en ce que**
le ou les tests statistiques d'hypothèse comprennent un test de Dickey-Fuller.

6. Procédé selon l'une quelconque des revendications 1 à 5, **caractérisé en ce que**
la ou les distances statistiques comprennent une divergence de Kullback-Leibler.

7. Procédé selon l'une quelconque des revendications 1 à 6, **caractérisé en ce que**
le réseau neuronal sensible au temps comprend au moins l'un des éléments suivants : un réseau neuronal récurrent (RNN), un réseau Long Short-Term Memory (LSTM) et un Transformer.

8. Procédé selon l'une quelconque des revendications 1 à 7, **caractérisé en ce que**
l'estimation comprend au moins l'une des approches suivantes : une approche séquentielle et une approche séquence-à-séquence.

9. Procédé selon l'une quelconque des revendications 1 à 8, **caractérisé en ce que**
l'étape d'évaluation comprend une analyse de clusters des valeurs mesurées des séries temporelles observées et/ou des décalages de phase des séries temporelles observées lorsqu'une ou plusieurs valeurs seuils prédéterminées de l'écart sont dépassées.

10. Procédé selon l'une quelconque des revendications 1 à 9, **caractérisé en ce que**
l'alerte concerne au moins l'un des éléments suivants : une caractéristique anormale du fluide dans certaines plages temporelles de mesure, une caractéristique anormale du fluide située entre au moins deux unités de mesure (MU), et une défaillance d'un capteur.

11. Système destiné à mettre en œuvre le procédé selon l'une quelconque des revendications 1 à 10, comprenant :
a) un réseau de fluides (1),
b) trois unités de mesure (MU) ou plus, disposées respectivement à trois emplacements différents ou plus dans le réseau de fluides (1), chacune des unités de mesure (MU) comprenant un ou plusieurs capteurs (3) destinés à déterminer une ou plusieurs valeurs mesurées d'une ou plusieurs grandeurs physiques, les grandeurs physiques étant pertinentes pour le transport du fluide et étant dépendantes du temps, chacune des valeurs mesurées étant déterminée en continu dans un intervalle de mesure prédéfini,
c) et une unité de traitement de données (2) destinée à recevoir les valeurs mesurées,
l'unité de traitement de données (2) étant configurée pour déterminer, pour chaque unité de mesure (MU), une série temporelle observée de valeurs mesurées de chaque grandeur physique, et l'unité de traitement de données (2) étant configurée pour exécuter :
i) une ou plusieurs étapes de description, comprenant :
• décomposer chaque série temporelle observée,
• ajuster chaque série temporelle observée au moyen d'un modèle de série temporelle,
• réaliser un ou plusieurs tests statistiques d'hypothèse pour le modèle de série temporelle,
• et mesurer une ou plusieurs distances statistiques entre deux séries temporelles observées différentes quelconques,
ii) une ou plusieurs étapes d'estimation, comprenant :
• déterminer un réseau neuronal sensible au temps qui est entraîné sur la base de séries temporelles observées historiques de la ou des grandeurs physiques provenant de toutes les unités de mesure (MU),
• et utiliser le réseau neuronal sensible au temps pour réaliser une estimation consistant à estimer, pour chaque unité de mesure (MU), une série temporelle estimée de chaque grandeur physique,
dans laquelle, pour chaque estimation, toutes les unités de mesure (MU) sont réparties entre l'unité de mesure (MU) à estimer et les unités de mesure (MU) restantes, les séries temporelles observées des unités de mesure restantes étant utilisées pour estimer la série temporelle estimée correspondante de l'unité de mesure à estimer, la série temporelle estimée comprenant des valeurs estimées pour toutes les valeurs mesurées correspondantes,
iii) et une ou plusieurs étapes d'évaluation, comprenant :
• déterminer, pour chaque unité de mesure (MU), un écart entre chaque valeur mesurée de chaque grandeur physique et chacune des valeurs estimées,
• recueillir les distances statistiques déterminées lors de la ou des étapes de description lorsqu'une ou plusieurs valeurs seuils prédéterminées de l'écart sont dépassées,
• quantifier l'effet d'une perturbation provoquant l'écart dans les unités de mesure (MU) affectées et évaluer la proximité des unités de mesure par rapport à une source de perturbation,
• réentraîner le réseau neuronal sensible au temps lorsque plus d'une valeur seuil prédéterminée des distances statistiques est dépassée,
• et émettre une alerte lorsqu'au moins une, mais pas toutes, des valeurs seuils prédéterminées des distances statistiques sont dépassées.
